# EUROPÄISCHE PATENTSCHRIFT

(11) **EP 2 098 110 B1**
(45) Veröffentlichungstag und Bekanntmachung des Hinweises auf die Patenterteilung: **23.11.2011**
(21) Anmeldenummer: 09153576.5
(22) Anmeldetag: 25.02.2009
(51) Int. Cl.: A01D 43/10, B02C 4/38

(54) **Körnerprozessorzusammenbau**
Grain processor structure
Assemblage de processeur de grain

(30) Priorität: 04.03.2008 DE 102008012487
(43) Veröffentlichungstag der Anmeldung: 09.09.2009
(73) Patentinhaber: Deere & Company, Moline, IL 61265-8098 (US)
(72) Erfinder: Engel, Manfred, 66484, Großsteinhausen (DE)
(74) Vertreter: Holst, Sönke

(56) Entgegenhaltungen:
- EP-A- 0 190 241
- EP-A- 0 429 658
- EP-A- 0 598 705
- EP-A- 1 600 049
- DE-A1- 4 216 807
- DE-U1- 8 817 251

## Beschreibung

Die Erfindung betrifft einen Körnerprozessorzusammenbau nach dem Oberbegriff des Anspruchs 1.

### Stand der Technik

Körnerprozessoren werden in der Landwirtschaft verwendet, um im aufgenommenen Erntegut, das zur Verfütterung an Tiere genutzt werden soll, enthaltene Körner aufzuschließen, so dass sie besser verdaut werden können.

Ein Körnerprozessorzusammenbau eingangs genannter Art wird in der EP 1 600 049 A beschrieben. Er setzt sich aus zwei Walzen zusammen, die jeweils an einem Rahmen befestigt sind. Die beiden Rahmen sind auf einer (oberen) Seite des zwischen den Walzen verbleibenden Spalts durch einen Schwenkstift miteinander drehbar um eine Achse drehbar verbunden, die sich parallel zu den Walzen und ihren Drehachsen erstreckt. Auf der zweiten (unteren) Seite des Spalts ist ein Keil zwischen die beiden Rahmen einschiebbar, um die sich bei fehlendem Erntegutdurchsatz ergebende Größe des Spalts zu definieren. Der Keil wird mittels eines Schwenkarms bewegt, der durch einen Hydraulikzylinder verschwenkbar ist. Weiterhin werden die Rahmen auf der zweiten Seite des Spalts durch eine Feder gegeneinander vorgespannt.

Als nachteilig ist bei dieser Anordnung anzusehen, dass die zur Spaltverstellung bereitgestellten Mittel relativ viel Raum erfordern.

Die DE 88 17 251 U und die WO 86/01128 A1 beschreiben Getreidemühlen mit mehreren Mahlwalzenpaaren, von denen eine Walze an einem ortsfesten Exzenterbolzen verschwenkbar befestigt und durch einen Ausrückzylinder zwischen einer eingerückten Betriebsstellung und einer ausgerückten Außerbetriebsstellung bewegbar ist. Die andere Walze ist jeweils zur Feineinstellung über eine Spindel positionsverstellbar. Die Walzen können sich gegen die Kraft einer Überlast-Federsicherung auseinander bewegen.

Die EP 0 429 658 A1 beschreibt eine Mahlanordnung für Getreide mit zwei Walzen, von denen eine erste ortsfest in einem Gestell montiert ist. Die andere Walze ist an einer Halterung angebracht, die auf der Eingangsseite des Spalts zwischen den Walzen durch eine Feder auf die andere Walze vorgespannt ist und auf der anderen Seite durch einen fremdkraftbetätigt rotierbaren Exzenter beweglich angeordnet ist.

### Aufgabe der Erfindung

Die der Erfindung zu Grunde liegende Aufgabe wird darin gesehen, eine kompakt realisierbare Kömerprozessoranordnung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Körnerprozessorzusammenbau für den Einbau in einen Feldhäcksler zum Aufschließen im Erntegut enthaltener Körner umfasst zwei Walzen, die um ihre Längsachse drehbar und antreibbar an zugehörigen Rahmenelementen gelagert sind und zwischen sich einen Spalt freilassen, durch den zu bearbeitendes Erntegut hindurchführbar ist. Auf einer ersten Seite des Spalts ist eine Drehlagerung angebracht, die das erste Rahmenelement, welches eine sich quer zur Drehachse der ersten Walze erstreckende Platte umfasst, an welcher die erste Walze durch eine Lageranordnung gelagert ist, und das zweite Rahmenelement, welches eine sich quer zur Drehachse der zweiten Walze erstreckende Platte umfasst, an welcher die zweite Walze durch eine Lageranordnung gelagert ist, um eine parallel zu den Längsachsen der beiden Walzen verlaufende Achse schwenkbar aneinander haltert. Auf der anderen, zweiten Seite des Spalts ist eine Verspanneinrichtung vorgesehen, die das erste Rahmenelement und das zweite Rahmenelement gegeneinander vorspannt. Die erwähnte Drehlagerung umfasst eine Welle, die einen Exzenter, d. h. ein kreiszylindrisches Element trägt, dessen Mittelachse gegenüber der Längsachse der Welle versetzt ist. An dem Exzenter ist das erste Rahmenelement drehbar gelagert. Die Welle ist weiterhin gegenüber dem zweiten Rahmenelement drehbar abgestützt. Das erste Rahmenelement umfasst eine sich quer zur Drehachse der ersten Walze erstreckende Platte, an welcher die erste Walze durch eine Lageranordnung gelagert ist, und eine weitere Platte, welche die Platte des zweiten Rahmenelements nach außen überdeckt und sich parallel zu dieser Platte erstreckt. Die Welle erstreckt sich durch die Platte des zweiten Rahmenelements und ist gegenüber dieser Platte drehbar gelagert ist, während der Exzenter innerhalb einer ihn umschließenden Öffnung in der weiteren Platte des ersten Rahmenelements drehbar gelagert ist. Die Platte des ersten Rahmenelements umfasst einen sich rechtwinklig von der Platte fort erstreckenden Steg, der durch Schraubverbindungen, die ihn mit der Lageranordnung der ersten Walze verbinden, mit einem sich rechtwinklig von der weiteren Platte erstreckenden Steg verbunden ist. Die Platte des zweiten Rahmenelements umfasst einen sich rechtwinklig von der Platte fort erstreckenden Steg, an dem die Lageranordnung der zweiten Walze durch Schraubverbindungen befestigt ist. Ein Bolzen erstreckt durch eine Öffnung im Steg der weiteren Platte und eine dazu koaxiale Öffnung im Steg des zweiten Rahmenelements, wobei zwischen den Stegen ein Ring auf den Bolzen aufgesteckt ist und die Verspanneinrichtung sich zwischen dem Steg der weiteren Platte und einer Unterlegscheibe befindet, welche an einer auf ein Gewinde des Bolzens aufgeschraubten Mutter anliegt.

Auf diese Weise erreicht man, dass der Abstand zwischen den beiden Walzen durch manuelles oder fremdkraftbetätigtes Drehen der Welle um ihre Längsachse veränderbar ist. Die Drehlagerung bildet demnach zusätzlich einen Mechanismus zum Verstellen des

Spaltabstands zwischen den Walzen und realisiert zwei Funktionen gleichzeitig. Dadurch erhält man einen sehr kompakten Aufbau des Körnerprozessorzusammenbaus.

Als Verspanneinrichtung kann eine Feder dienen, die insbesondere als Spiralfeder ausgeführt sein kann. Alternativ oder zusätzlich kann als Verspanneinrichtung ein so genannter Kraftbegrenzer verwendet werden, d. h. ein Überlastschutz, der zwischen den Rahmenelementen wirkende Kräfte von einem Rahmenelement auf das andere Rahmenelement überträgt. Sobald eine Ausrastkraft des Kraftbegrenzers überschritten wird, wird durch den Kraftbegrenzer der Kraftfluss zwischen den Rahmenelementen unterbrochen, so dass mindestens eines der Rahmenelemente gegen die wirkenden Kräfte ausweichen kann. Bei einer nur einen oder mehrere Kraftbegrenzer verwendenden Ausführungsform ist der Abstand zwischen den Rahmenelementen auf der ersten Seite des Spalts demnach konstant und eines der Rahmenelemente weicht nur dann nach außen aus, wenn ein übermäßiger Erntegutfluss oder ein starrer Fremdkörper zwischen den Walzen hindurchgeht, da dann der Kraftbegrenzer auslöst und den Kraftfluss unterbricht. Der Kraftbegrenzer kann nach Beseitigung des Staus wieder in seine kraftübertragende Position verbracht werden. Es ist aber auch möglich, den oder die Kraftbegrenzer mit einer oder mehreren Feder(n) in Reihe zu schalten, um eine Sicherung für den Fall eines übermäßigen Erntegutflusses oder für den Durchgang eines Fremdkörpers zu schaffen.

### Ausführungsbeispiel

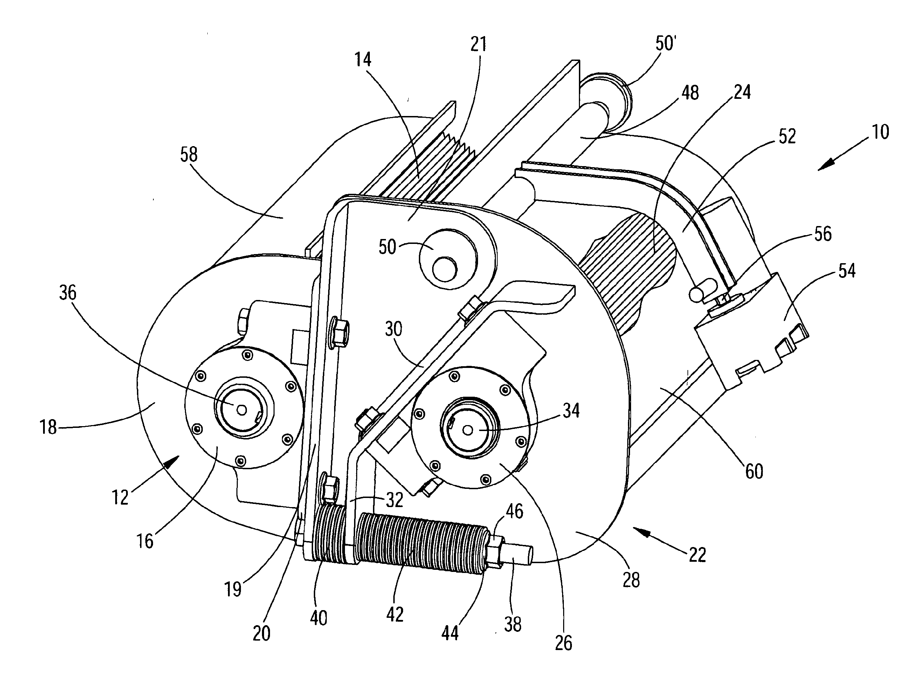

Anhand der Abbildung wird ein Ausführungsbeispiel der Erfindung erläutert. Sie zeigt eine perspektivische Ansicht eines erfindungsgemäßen Kömerprozessorzusammenbaus.

Ein in der Figur dargestellter Körnerprozessorzusammenbau 10 ist zum lösbaren Einbau in einen Feldhäcksler vorgesehen, in dem er sich im eingebauten Zustand im Erntegutfluss zwischen einer Häckseltrommel und einem Auswurfbeschleuniger befindet. Hierzu sei auf die Offenbarung der DE 101 28 052 A verwiesen.

Der Körnerprozessorzusammenbau 10 umfasst ein erstes Rahmenelement 12, an dem eine erste, mit einer profilierten (z. B. sägezahnartigen) Oberfläche ausgestattete Walze 14 mittels einer Lageranordnung 16 um die Längsachse der Walze 14 drehbar gelagert ist. Das erste Rahmenelement 12 umfasst eine sich quer zur Drehachse der Walze 14 erstreckende Platte 18 und einen sich rechtwinklig von der Platte 18 von der Walze 14 fort erstreckenden Steg 20, an dem die Lageranordnung 16 durch Schraubverbindungen befestigt ist. Der Steg 20 und die Platte 18 können miteinander verschweißt oder einteilig (durch Biegen) ausgeführt sein. Der Steg 20 ist durch die Schraubverbindungen, die ihn mit der Lageranordnung 16 verbinden, mit einem sich parallel zum Steg 20 erstreckenden Steg 19 verbunden, der rechtwinklig von einer weiteren Platte 21 absteht und mit ihr einteilig (durch Biegen) ausgeführt oder verschweißt ist.

Weiterhin ist ein zweites Rahmenelement 22 vorhanden, an dem eine zweite, mit einer profilierten (z. B. sägezahnartigen) Oberfläche ausgestattete Walze 24 mittels einer Lageranordnung 26 um die Längsachse der Walze 24 drehbar gelagert ist. Das zweite Rahmenelement 22 umfasst eine sich quer zur Drehachse der Walze 14 erstreckende Platte 28 und einen sich rechtwinklig von der Platte 28 und von der Walze 24 fort erstreckenden, mit der Platte 28 verschweißten Steg 30, an dem die Lageranordnung 26 durch Schraubverbindungen befestigt ist. Der Steg 30 umfasst einen unteren Abschnitt 32, der gegenüber dem die Lageranordnung 26 halternden Bereich des Stegs 30 um etwa 45° nach außen abgewinkelt ist und sich zumindest etwa parallel zum Steg 19 des ersten Rahmenelements 12 erstreckt. Die Platte 21 überdeckt in dem oberhalb des Stegs 30 liegenden Bereich die Platte 28 nach außen und erstreckt sich parallel zu ihr.

Die Walzen 14, 24 umfassen mittige Wellen 34, 36, die mittels jeweils einer außerhalb der Lageranordnung 16, 26 angeordneten Riemenscheibe (nicht gezeigt) in Drehung versetzbar sind, in der Regel mit um einige Prozent voneinander abweichenden Drehzahlen. Die Walzen 14, 24 nehmen im Erntebetrieb das Erntegut in dem zwischen ihnen verbleibenden Spalt auf und schließen im Erntegut enthaltene Körner auf, um sie leichter verdaubar zu machen.

Ein mit einem Schraubgewinde ausgestatteter Bolzen 38 erstreckt sich durch eine horizontale Öffnung im Steg 19 der weiteren Platte 21 des ersten Rahmenelements 12 und eine dazu koaxiale Öffnung im unteren Abschnitt 32 des Stegs 30 des zweiten Rahmenelements 22. Der Bolzen 38 liegt mit seinem Kopf am Steg 19 an. Zwischen dem Steg 19 und dem unteren Abschnitt 32 des Stegs 30 ist auf den Bolzen 38 ein aus mehreren Unterlegscheiben gebildeter Ring 40 aufgesteckt. Eine als Verspanneinrichtung 42 dienende, den Bolzen 38 wendelförmig umrundende, spiralförmige Feder liegt mit einem ersten Ende am unteren Abschnitt 32 des Stegs 30 an und mit ihrem zweiten Ende an einer Unterlegscheibe 44, die wiederum an einer auf das Gewinde des Bolzens 38 aufgeschraubten Mutter 46 anliegt. Die Mutter 46 hält die Verspanneinrichtung 42 in einer zusammengedrückten Stellung, so dass letztere die Rahmenelemente 12, 22 zusammendrückt, bis - bei fehlendem oder geringem Emtegutdurchsatz - der Ring 40 am Steg 19 und am unteren Abschnitt 32 des Stegs 30 anliegt.

Eine sich parallel zu den Längs- und Drehachsen der Walzen 14, 24 erstreckende Welle 48 erstreckt sich durch eine Öffnung in der Platte 28 des zweiten Rahmenelements 22 und ist gegenüber der Platte 28 drehbar gelagert, sei es durch ein separates Wälzkörperlager oder nur durch den direkten Kontakt zueinander. Die Welle 48 ist an ihrem äußeren Ende drehfest mit einem Exzenter 50 verbunden, der ein kreiszylindrisches Element mit einer gegenüber der Achse der Welle in radialer Richtung versetzten Mittelachse ist. Der Exzenter 50 ist innerhalb einer ihn umschließenden Öffnung in der weiteren Platte 21 des ersten Rahmenelements 12 angeordnet, so dass letzteres gegenüber dem Exzenter 50 drehbar ist, sei es durch ein separates Wälzkörperlager oder nur durch den direkten Kontakt zueinander. Die Welle 48 ist über einen mit ihr drehfest verbundenen Hebel 52 und weitere Verbindungselemente 56 mit einem fremdkraftbetätigten Aktor 54 in Form eines Elektromotors oder Hydraulikzylinders mit einem linear verschiebbaren Ausgangselement verbunden, der somit geeignet ist, die Welle 48 um ihre Längsachse rotieren zu lassen. Das Gehäuse des Aktors 54 ist am zweiten Rahmenelement 22 festgelegt.

An ihren äußeren, vom Spalt zwischen den Walzen 14, 24 abgewandten Seiten sind die Walzen 14, 24 durch Abdeckungen 58, 60 mit halbkreisförmigen Querschnitten nach außen hin abgedeckt, um das Austreten von Erntegut zu vermeiden und den Aktor 54 zu schützen.

Auf der bezüglich der Figur rückwärtigen Seite der Walzen 14, 24 sind weitere Rahmenelemente (nicht gezeigt) vorgesehen, die zu den dargestellten Rahmenelementen 12, 22 symmetrisch sind, die Walzen 14, 24 ebenfalls mittels nicht gezeigter Lageranordnungen abstützen und mittels einer weiteren Feder (nicht gezeigt) gegeneinander vorgespannt sind. Das dortige zweite Rahmenelement ist ebenfalls auf der Welle 48 drehbar gelagert, während das dortige erste Rahmenelement über einen Exzenter 50' auf der Welle 48 drehbar gelagert ist.

Die Walzen 14, 24 schließen zwischen sich einen Spalt ein, der in der Zeichnung nicht erkennbar ist und dessen Größe bei fehlendem Erntegutdurchsatz durch den Ring 40 und die Drehstellung der Welle 48 definiert wird. Während sich die Drehlagerung mit der Welle 48 auf einer ersten (oberen) Seite des Spalts befindet, liegt die Verspanneinrichtung 42 auf der zweiten (unteren) Seite des Spalts. In der Regel ist das zweite Rahmenelement 22 am Rahmen des Feldhäckslers befestigt, so dass sich das erste Rahmenelement 12 bei einlaufendem Erntegut entgegen der Kraft der Verspanneinrichtung 42 im Uhrzeigersinn um den Exzenter 50 drehen kann. Die Verspanneinrichtung 42 wirkt mit der bezüglich des Erntegutflusses einlassseitigen Seite des Spalts zwischen den Walzen 14, 24 zusammen, während sich die Drehlagerung auf der bezüglich des Erntegutflusses auslassseitigen Seite des Spalts zwischen den Walzen 14, 24 befindet. Demnach kann sich der Spalt zwischen den Walzen 14, 24 mit steigendem Emtegutdurchsatz vergrößern, indem das erste Rahmenelement 12 mit der ersten Walze 14 gegenüber dem zweiten Rahmenelement 22 mit der zweiten Walze 24 um die Mittelachse des Exzenters 50 schwenkt.

Zur Veränderung der Spaltgröße kann die Welle 48 mittels des Aktors 54 um ihre Längsachse gedreht werden. Das führt zu einer Drehung des Exzenters 50 gegenüber dem ersten Rahmenelement 12 und damit zu einer seitlichen Bewegung des ersten Rahmenelements 12 gegenüber dem zweiten Rahmenelement 22. Auf diese Weise kann ein Bediener in der Kabine des Feldhäckslers die Spaltgröße und somit die Wirkung des Körnerprozessorzusammenbaus 10 an die aktuellen Erntebedingungen anpassen, insbesondere an die jeweilige Erntegutfeuchte. Zu Zwecken einer Anzeige der Spaltgröße für den Bediener oder zur Rückkopplung bei einer selbsttätigen Regelung der Spaltgröße ist auch eine Erfassung des aktuellen Abstands zwischen den Walzen 14, 24 oder der Position der Welle 48 mittels eines geeigneten Sensors denkbar. Es ist auch eine selbsttätige Anpassung der Spaltgröße an die Erntebedingungen möglich, wie in der EP 1 166 619 A beschrieben wird.

## Patentansprüche

1. Körnerprozessorzusammenbau (10) für den Einbau in einen Feldhäcksler zum Aufschließen im Erntegut enthaltener Körner, umfassend:
eine erste Walze (14), die um ihre Längsachse drehbar und antreibbar an einem ersten Rahmenelement (12) gelagert ist, das eine sich quer zur Drehachse der ersten Walze (14) erstreckende Platte (18) umfasst, an welcher die erste Walze (14) durch eine Lageranordnung (16) gelagert ist, und
eine zweite Walze (24), die mit der ersten Walze (14) einen Spalt bildet, durch den zu bearbeitendes Erntegut hindurchführbar ist und die um ihre Längsachse drehbar und antreibbar an einem zweiten Rahmenelement (22) gelagert ist, welches eine sich quer zur Drehachse der zweiten Walze (24) erstreckende Platte (28) umfasst, an welcher die zweite Walze (24) durch eine Lageranordnung (26) gelagert ist,
eine auf einer ersten Seite des Spalts angeordnete Drehlagerung mit einer gegenüber dem zweiten Rahmenelement (22) drehbar gelagerten Welle (48), die das erste Rahmenelement (12) und das zweite Rahmenelement (22) um eine parallel zu den Längsachsen der beiden Walzen (14, 24) verlaufende Achse schwenkbar aneinander haltert, und
eine auf einer zweiten Seite des Spalts angeordnete Verspanneinrichtung (42), die das erste Rahmenelement (12) und das zweite Rahmenelement (22) gegeneinander vorspannt,
wobei der Abstand zwischen den Walzen (14, 24) verstellbar ist,
**dadurch gekennzeichnet, dass** das erste Rahmenelement (12) eine weitere Platte (21) umfasst, welche die Platte (28) des zweiten Rahmenelements (22) nach außen überdeckt und sich parallel zur Platte (28) des zweiten Rahmenelements (22) erstreckt,
dass die Welle (48) sich durch die Platte (28) des zweiten Rahmenelements (22) erstreckt und gegenüber dieser Platte (28) drehbar gelagert ist, während ein starr an der Welle (48) der Drehlagerung befestigter Exzenter (50) innerhalb einer ihn umschließenden Öffnung in der weiteren Platte (21) des ersten Rahmenelements (12) drehbar gelagert ist, so dass der Abstand zwischen den Walzen (14, 24) durch Drehen der Welle (48) um ihre Längsachse veränderbar ist,
dass die Platte (18) des ersten Rahmenelements (12) einen sich rechtwinklig von der Platte (18) fort erstreckenden Steg (20) umfasst, der durch Schraubverbindungen, die ihn mit der Lageranordnung (16) der ersten Walze (14) verbinden, mit einem sich rechtwinklig von der weiteren Platte (21) erstreckenden Steg (19) verbunden ist,
dass die Platte (28) des zweiten Rahmenelements (22) einen sich rechtwinklig von der Platte (28) fort erstreckenden Steg (30) umfasst, an dem die Lageranordnung (26) der zweiten Walze (24) durch Schraubverbindungen befestigt ist,
und dass sich ein Bolzen (38) durch eine Öffnung im Steg (19) der weiteren Platte (21) und eine dazu koaxiale Öffnung im Steg (30) des zweiten Rahmenelements (22) erstreckt, wobei zwischen den Stegen (19, 30) ein Ring (40) auf den Bolzen (38) aufgesteckt ist und die Verspanneinrichtung (42) sich zwischen dem Steg (19) der weiteren Platte (21) und einer Unterlegscheibe (44) befindet, welche an einer auf ein Gewinde des Bolzens (38) aufgeschraubten Mutter (46) anliegt.

2. Körnerprozessorzusammenbau (10) nach Anspruch 1, **dadurch gekennzeichnet, dass** die Welle (48) manuell oder mittels eines fremdkraftbetätigten Aktors (54) drehbar ist.

3. Körnerprozessorzusammenbau (10) nach einem der Ansprüche 1 oder 2, **dadurch gekennzeichnet, dass** an beiden Enden der Walzen (14, 24) jeweils eine Drehlagerung und eine Verspanneinrichtung (42) angeordnet sind.

4. Körnerprozessorzusammenbau (10) nach einem der Ansprüche 1 bis 3, **dadurch gekennzeichnet, dass** die Verspanneinrichtung (42) eine Feder und/oder einen Kraftbegrenzer umfasst.

5. Selbstfahrende Erntemaschine, insbesondere Feldhäcksler, mit einem Körnerprozessorzusammenbau (10) nach einem der vorhergehenden Ansprüche.

6. Selbstfahrende Erntemaschine nach Anspruch 5, **dadurch gekennzeichnet, dass** das zweite Rahmenelement (22) starr mit einem Fahrgestell der Erntemaschine verbunden ist.

## Claims

1. Grain processor structure (10) for fitting into a chopper forage harvester for breaking up grains contained in the crop, comprising:
a first roll (14) which is mounted so as to be rotatable about the longitudinal axis thereof and drivable on a first frame element (12) which comprises a plate (18) which extends transversely with respect to the axis of rotation of the first roll (14) and on which the first roll (14) is mounted by means of a bearing arrangement (16), and
a second roll (24) which, together with the first roll (14), forms a nip through which the crop which is to be processed can be passed and which is mounted so as to be rotatable about the longitudinal axis thereof and so as to be drivable on a second frame element (22) which comprises a plate (28) which extends transversely with respect to the axis of rotation of the second roll (24) and on which the second roll (24) is mounted by means of a bearing arrangement (26),
a rotary mounting, which is arranged on a first side of the nip, with a shaft (48) which is mounted rotatably in relation to the second frame element (22) and secures the first frame element (12) and the second frame element (22) to each other so as to be pivotable about an axis running parallel to the longitudinal axis of the two rolls (14, 24), and
a bracing device (42) which is arranged on a second side of the nip and prestresses the first frame element (12) and the second frame element (22) towards each other,
wherein the distance between the rolls (14, 24) is adjustable,
**characterized in that** the first frame element (12) comprises a further plate (21) which outwardly covers the plate (28) of the second frame element (22) and extends parallel to the plate (28) of the second frame element (22),
**in that** the shaft (48) extends through the plate (28) of the second frame element (22) and is mounted rotatably in relation to said plate (28) while an eccentric (50), which is fastened rigidly to the shaft (48) of the rotary mounting, is mounted rotatably within an opening, which surrounds the eccentric, in the further plate (21) of the first frame element (12), and therefore the distance between the rolls (14, 24) can be changed by rotation of the shaft (48) about the longitudinal axis thereof,
**in that** the plate (18) of the first frame element (12) comprises a web (20) which extends away at right angles from the plate (18) and is connected by screw connections, which connect said web to the bearing arrangement (16) of the first roll (14), to a web (19) extending at right angles from the further plate (21),
**in that** the plate (28) of the second frame element (22) comprises a web (30) which extends away at right angles from the plate (28) and to which the bearing arrangement (26) of the second roll (24) is fasted by screw connections,
and **in that** a bolt (38) extends through an opening in the web (19) of the further plate (21) and through an opening, which is coaxial thereto, in the web (30) of the second frame element (22), a ring (40) being placed onto the bolt (38) between the webs (19, 30), and the bracing device (42) being located between the web (19) of the further plate (21) and a washer (44) which bears against a nut (46) screwed onto a thread of the bolt (38).

2. Grain processor structure (10) according to Claim 1, **characterized in that** the shaft (48) is rotatable manually or by means of an actuator (54) actuated by external force.

3. Grain processor structure (10) according to either of Claims 1 or 2, **characterized in that** a rotary mounting and a bracing device (42) are arranged at both ends of the rolls (14, 24).

4. Grain processor structure (10) according to one of Claims 1 to 3, **characterized in that** the bracing device (42) comprises a spring and/or a force limiter.

5. Self-propelled harvester, in particular chopper forage harvester, with a grain processor structure (10) according to one of the preceding claims.

6. Self-propelled harvester according to Claim 5, **characterized in that** the second frame element (22) is connected rigidly to a chassis of the harvester.

## Revendications

1. Assemblage de processeur de grain (10) pour l'installation dans une faucheuse-hacheuse pour la désintégration des grains contenus dans la récolte, comprenant :
un premier cylindre (14), qui est monté de manière à pouvoir tourner autour de son axe longitudinal et à pouvoir être entraîné sur un premier élément de bâti (12), qui comprend une plaque (18) s'étendant transversalement à l'axe de rotation du premier cylindre (14), sur laquelle le premier cylindre (14) est monté au moyen d'un agencement de palier (16), et
un deuxième cylindre (24), qui forme avec le premier cylindre (14) une fente à travers laquelle la récolte à traiter peut être guidée et qui est monté de manière à pouvoir tourner autour de son axe longitudinal et à pouvoir être entraîné sur un deuxième élément de bâti (22), qui comprend une plaque (28) s'étendant transversalement à l'axe de rotation du deuxième cylindre (24), sur laquelle le deuxième cylindre (24) est monté au moyen d'un agencement de palier (26),
un support sur palier rotatif disposé sur un premier côté de la fente, avec un arbre (48) monté à rotation par rapport au deuxième élément de bâti (22), qui retient l'un par rapport à l'autre le premier élément de bâti (12) et le deuxième élément de bâti (22) de manière pivotante autour d'un axe s'étendant parallèlement aux axes longitudinaux des deux cylindres (14, 24), et
un dispositif de serrage (42) disposé sur un deuxième côté de la fente, qui précontraint le premier élément de bâti (12) et le deuxième élément de bâti (22) l'un contre l'autre,
la distance entre les cylindres (14, 24) étant réglable,
**caractérisé en ce que** le premier élément de bâti (12) comprend une plaque supplémentaire (21), qui recouvre vers l'extérieur la plaque (28) du deuxième élément de bâti (22), et qui s'étend parallèlement à la plaque (28) du deuxième élément de bâti (22),
**en ce que** l'arbre (48) s'étend à travers la plaque (28) du deuxième élément de bâti (22) et est monté de manière à pouvoir tourner par rapport à cette plaque (28), tandis qu'un excentrique (50) fixé de manière rigide sur l'arbre (48) du support sur palier rotatif est monté de manière à pouvoir tourner à l'intérieur d'une ouverture l'entourant dans la plaque supplémentaire (21) du premier élément de bâti (12), de sorte que la distance entre les cylindres (14, 24) puisse être modifiée par rotation de l'arbre (48) autour de son axe longitudinal,
**en ce que** la plaque (18) du premier élément de bâti (12) comprend une nervure (20) se prolongeant à angle droit depuis la plaque (18), qui est connectée, par des connexions vissées, qui la relient à l'agencement de palier (16) du premier cylindre (14), à une nervure (19) s'étendant à angle droit depuis la plaque supplémentaire (21),
**en ce que** la plaque (28) du deuxième élément de bâti (22) comprend une nervure (30) se prolongeant à angle droit depuis la plaque (28) sur laquelle nervure est fixé l'agencement de palier (26) du deuxième cylindre (24) par des connexions vissées,
et **en ce qu'**un boulon (38) s'étend à travers une ouverture dans la nervure (19) de la plaque supplémentaire (21) et à travers une ouverture coaxiale à celle-ci dans la nervure (30) du deuxième élément de bâti (22), une bague (40) étant enfichée sur le boulon (38) entre les nervures (19, 30), et le dispositif de serrage (42) se trouvant entre la nervure (19) de la plaque supplémentaire (21) et une rondelle (44) qui s'applique contre un écrou (46) vissé sur un filetage du boulon (38).

2. Assemblage de processeur de grain (10) selon la revendication 1, **caractérisé en ce que** l'arbre (48) peut tourner de manière manuelle ou au moyen d'un actionneur (54) actionné par une force extérieure.

3. Assemblage de processeur de grain (10) selon l'une quelconque des revendications 1 ou 2, **caractérisé en ce qu'**un support sur palier rotatif et un dispositif de serrage (42) sont respectivement disposés sur les deux extrémités des cylindres (14, 24).

4. Assemblage de processeur de grain (10) selon l'une quelconque des revendications 1 à 3, **caractérisé en ce que** le dispositif de serrage (42) comprend un ressort et/ou un limiteur de force.

5. Machine de récolte autopropulsée, en particulier faucheuse-hacheuse, comprenant un assemblage de processeur de grain (10) selon l'une quelconque des revendications précédentes.

6. Machine de récolte autopropulsée selon la revendication 5, **caractérisée en ce que** le deuxième élément de bâti (22) est connecté rigidement à un châssis de la machine de récolte.
